# FASCICULE DE BREVET EUROPEEN

(11) **EP 0 763 649 B1**
(45) Date de publication et mention de la délivrance du brevet: **25.02.1998**
(21) Numéro de dépôt: 96420296.4
(22) Date de dépôt: 18.09.1996
(51) Int. Cl.: E21B 10/58, B23B 51/00

(54) **Partie coupante d'un foret**
Schneidteil eines Bohrmeissels
Cutting portion of a drill bit

(30) Priorité: 18.09.1995 FR 9511124
(43) Date de publication de la demande: 19.03.1997
(73) Titulaire: DIAGER S.A., 39800 Poligny (FR)
(72) Inventeur: Defougeres, Pierre, 39800 Poligny (FR); Rigolet, Pierre, 39800 Poligny (FR)
(74) Mandataire: Bratel, Gérard

(56) Documents cités:
- EP-A- 0 599 596
- EP-A- 0 657 617
- CH-A- 272 188
- DE-C- 759 901
- DE-C- 4 430 784
- FR-A- 1 006 219
- FR-A- 1 251 693
- FR-A- 2 521 633
- GB-A- 530 113
- GB-A- 737 471
- US-A- 2 507 222
- US-A- 2 865 606
- US-A- 2 976 944

## Description

La présente invention concerne les forets recevant des plaquettes de coupe rapportées, notamment les forets de maçonnerie mais aussi tous forets et outils de perçage analogues, à plaquettes de coupe brasées. Cette invention se rapporte, plus particulièrement, à la partie coupante de tels forets.

Dans les forets de maçonnerie classiques, la partie coupante est constituée par une seule plaquette de coupe, placée et fixée par brasage dans un logement en forme de rainure diamétrale, ménagée à l'extrémité de la tête de foret qui, de façon habituelle, possède une forme générale cylindrique, tandis que la plaquette peut être de forme générale pentagonale - voir par exemple le document EP-A-0599596. Un tel foret à plaquette unique possède seulement deux arêtes de coupe, et la plus grande partie de la section circulaire du foret n'est pas active.

Il en résulte une vitesse de perçage relativement réduite, des efforts importants à fournir par l'opérateur, et une imprécision de la forme du trou percé, notamment avec des phénomènes d'ovalisation ou de triangulation.

Des forets à plaquettes de coupe multiples ont déjà été proposés. Ces forets possèdent des plaquettes très nombreuses disposées suivant des lignes radiales (voir le document FR-A-2521633), ou des plaquettes moins nombreuses disposées le plus souvent en croix ou en étoile, des exemples en étant donnés par les documents FR-A-1006219, EP-A-0657617, US-A-2507222 et US-A-2865606. Ces réalisations ne correspondent cependant pas à l'objet de la présente invention, du point de vue de la structure et des avantages.

Le document EP-A-657617 décrit une partie coupante d'un foret correspondant au préambule de la revendication 1.

La présente invention a pour but de fournir des forets à partie coupante perfectionnée, mais conservant une structure relativement simple avec des plaquettes de coupe en nombre limité, permettant un perçage plus rapide tout en réduisant les efforts à fournir par l'opérateur, et permettant aussi l'obtention de trous percés avec une plus grande précision.

A cet effet, l'invention a essentiellement pour objet une partie coupante d'un foret selon la revendication 1.

Ainsi, l'invention multiplie les plaquettes de coupe, donc les arêtes de coupe de l'outil en procurant une partie coupante de foret à six arêtes de coupe, permettant un perçage plus rapide et de moindres efforts de l'opérateur, tout en garantissant l'obtention de trous parfaitement cylindriques. A cet égard, on notera que les extrémités respectives des trois plaquettes de coupe peuvent déterminer, à la périphérie de la tête du foret, six points de guidage concentriques assurant la précision des trous percés. Même en cas de rupture de l'un des points de guidage, les cinq autres points répartis sur une même circonférence continuent de garantir l'efficacité de guidage, évitant ainsi des vibrations perturbatrices qui pourraient entraîner la destruction de l'outil. Un foret convenablement guidé travaille de façon plus précise, plus efficace et plus sûre.

De préférence, la plaquette de coupe centrale est placée, et fixée par brasage, dans une rainure diamétrale creusée à l'extrémité de la tête de foret, tandis que les deux plaquettes de coupe latérales sont placées, et fixées par brasage dans deux autres rainures respectives creusées à l'extrémité de la tête de foret de part et d'autre de la rainure diamétrale.

Selon un mode de réalisation de l'invention, les deux plaquettes de coupe latérales sont orientées parallèlement à la plaquette de coupe centrale, et sont situées à égale distance de celle-ci.

Selon un autre mode de réalisation de l'invention, les deux plaquettes de coupe latérales sont orientées suivant des directions parallèles entre elles mais formant un angle aigu par rapport à la direction diamétrale de la plaquette de coupe centrale. L'angle d'inclinaison des plaquettes de coupe latérales, par rapport à la plaquette centrale, est de préférence inférieur ou égal à 20° environ.

Cette dernière disposition est particulièrement avantageuse, pour quatre raisons principales, l'effet rotatif du marteau perforateur étant renforcé par l'effet de "vis" alors engendré par la rotation de l'outil avec les conséquences suivantes :
1 - En tournant, les plaquettes de coupe recentrent en permanence l'outil dans l'axe, répercutant ainsi la poussée du marteau perforateur toujours sur son axe longitudinal.
2 - De plus, l'effet de "vis" permet d'évacuer plus facilement les poussières de perçage vers l'arrière, ce qui diminue la pression exercée sur la face avant de la plaquette de coupe centrale. La disposition des plaquettes latérales permet aussi de guider les poussières vers l'orifice ou les canaux évacuateurs.
3 - L'angle d'inclinaison approprié des plaquettes latérales assure en outre une pénétration progressive de ces plaquettes dans le matériau à percer, ce qui ajoute à leurs percussions une performance accrue.
4 - Enfin cette dispositon rend la répartition des points de guidage irrégulière et aléatoire, sur la circonférence de la tête de foret, ce qui procure un guidage encore amélioré.

Avantageusement, les trois plaquettes de coupe sont de forme générale pentagonale, les deux plaquettes latérales étant de dimensions inférieures à celles de la plaquette centrale. Ainsi la plaquette de coupe centrale est identique aux plaquettes normalisées pour les outils du genre considéré, sa largeur étant égale à la cote nominale du foret ; les deux plaquettes de coupe latérales sont de forme identique mais de dimensions plus petites, ce qui est imposé par leur disposition.

Les deux plaquettes de coupe latérales peuvent être situées à la même hauteur que la plaquette de coupe centrale. Ces deux plaquettes de coupe latérales peuvent aussi être situées en avant ou en arrière de la plaquette de coupe centrale. En particulier, si les pointes des plaquettes latérales sont disposées "plus haut" que la plaquette centrale, on obtient un effet supplémentaire et avantageux de fractionnement des copeaux. Encore plus précisement, dans cas d'un outil travaillant par percussion, le fait que les deux plaquettes latérales soient positionnées légèrement "plus haut" que la plaquette centrale a pour effet de créer une triple percussion, reproduisant ainsi avec plus d'efficacité la frappe du perforateur, car celle-ci est répétée en des points distincts et distants les uns des autres, en formant alors des grains plutôt que des poussières de perçage. L'évacuation de grains de matière est plus aisée que celle de poussières fines qui risquent de s'agglomérer et de provoquer alors en échauffement important.

Selon une caractéristique complémentaire, des rainures longitudinales, notamment au nombre de quatre rainures ou de deux rainures, sont ménagées dans la tête de foret et débouchent, à l'extrémité de cette tête, dans les intervalles situés entre la plaquette de coupe centrale et les deux plaquettes de coupe latérales. Ces rainures longitudinales, mettant à profit des espaces disponibles entre les trois plaquettes de coupe, servent au dégagement des poussières de perçage.

Ces caractéristiques et avantages techniques particuliers ne doivent pas faire oublier les résultats et avantages principaux procurés par la partie coupante de foret objet de l'invention, ici rappelés et précisés :
- Pénétration plus rapide de l'outil dans le matériau à percer, d'où un rendement augmenté et une durée d'utilisation réduite pour l'appareil utilisé, tel que marteau perforateur.
- Meilleur confort d'utilisation, et fatigue réduite, pour l'utilisateur.
- Sécurité améliorée grâce au guidage parfait de l'outil, et suppression des vibrations, d'où allègement de la durée de vie de l'outil.
- Toujours en raison de ce parfait guidage de l'outil, obtention de trous d'une grande précision dimensionnelle, ce qui est important dans l'application principale de l'invention (forets de maçonnerie) où il s'agit de percer des trous destinés à recevoir des organes de fixation.

De toute façon, l'invention sera mieux comprise à l'aide de la description qui suit, en référence au dessin schématique annexé représentant, à titre d'exemples, quelques formes de réalisation de cette partie coupante d'un foret :
Figure 1 est une vue en perspective d'une tête de foret, avec partie coupante conforme à la présente invention ;
Figure 2 est une vue en bout de la tête de foret de figure 1 ;
Figure 3 est une vue de côté de la tête de foret des figures 1 et 2 ;
Figure 4 est une vue en perspective d'une variante de cette tête de foret ;
Figure 5 est une vue en bout de la tête de foret de figure 4 ;
Figure 6 est une vue de côté de la tête de foret des figures 4 et 5.

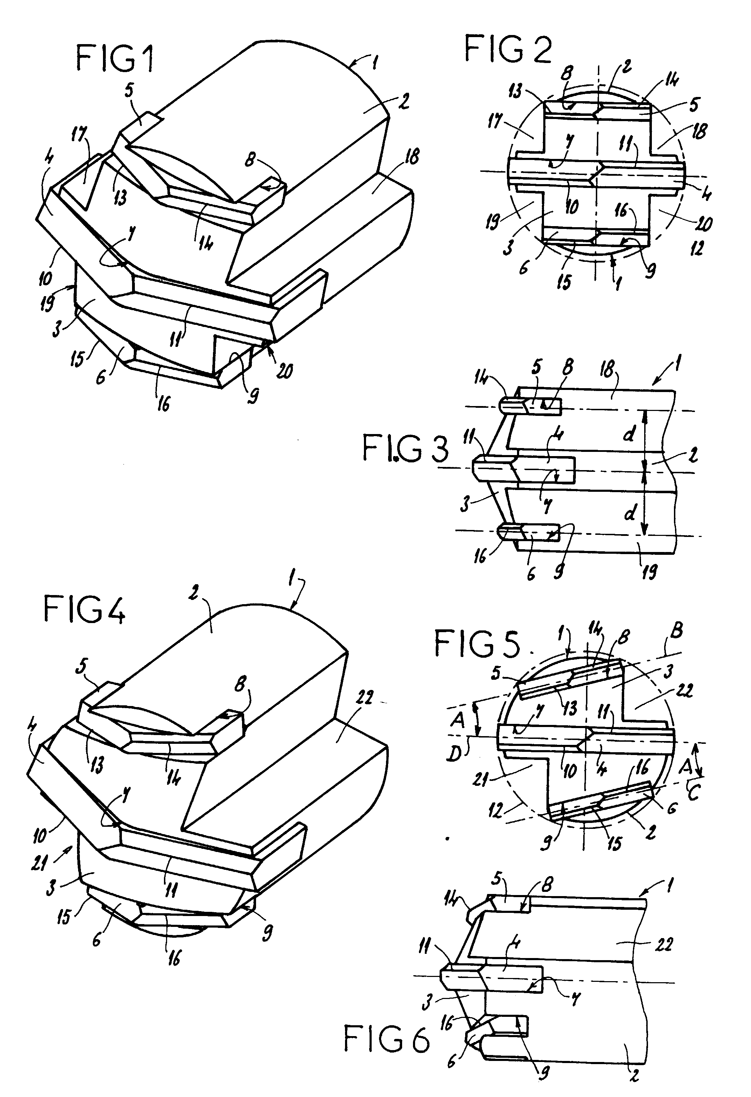

Les figures 1 à 3 montrent une tête de foret pour marteau perforateur, qui s'inscrit de façon générale dans un cylindre. La partie en acier 1 de la tête de foret présente une surface latérale cylindrique 2 et, à son extrémité, une surface conique 3. Cette extrémité reçoit trois plaquettes de coupe 4,5,6 en carbure.

La première plaquette de coupe 4 est disposée diamétralement, à l'extrémité de la tête de foret. Cette plaquette 4, de forme générale pentagonale, est placée dans une rainure diamétrale 7 creusée dans la surface d'extrémité conique 3, et est fixée par brasage dans la rainure 7. La pointe de cette première plaquette 4 est donc située sur l'axe du foret.

Les deux autres plaquettes de coupe 5 et 6 sont disposées de part et d'autre de la première plaquette 4, et sont ici orientées parallèlement à cette première plaquette 4, dont elles sont séparées par des distances égales d. Les deux plaquettes 5 et 6, de forme générale pentagonale mais de plus petites dimensions que la première plaquette 4, sont placées dans deux rainures respectives 8 et 9, creusées dans la surface d'extrémité conique 3 de part et d'autre de la rainure diamétrale 7, parallèlement à cette dernière. La fixation des deux plaquettes 5 et 6 dans les rainures 8 et 9 correspondantes est aussi réalisée par brasage. Les pointes respectives des deux plaquettes 5 et 6 sont ainsi diamétralement opposées, par rapport à l'axe du foret.

La première plaquette de coupe 4 possède deux arêtes de coupe 10 et 11 et elle s'inscrit dans un cercle 12 qui définit le diamètre du perçage réalisé par le foret.

Chacune des deux autres plaquettes de coupe 5 et 6 possède aussi deux arêtes de coupe, respectivement 13,14 et 15,16. Ces autres plaquettes de coupe 5 et 6 atteignent, par leurs extrémités, le cercle 12 dans lequel s'inscrit la première plaquette de coupe 4. Les deux plaquettes de coupe 5 et 6 peuvent se situer à la même hauteur que la première plaquette 4, ou bien être plus hautes ou plus basses.

Dans l'ensemble, on obtient ainsi une tête de foret dont la partie coupante possède trois plaquettes de coupe 4,5,6, soit une plaquette centrale 4 et deux plaquettes latérales 5 et 6, et au total six arêtes de coupe 10,11,13,14,15,16 dont les extrémités sont situées sur un même cercle 12, et déterminent six points de guidage concentriques. Dans l'exemple de réalisation des figures 1 à 3, la tête de foret comporte encore, ménagées dans sa partie en acier 1, quatre rainures longitudinales 17,18,19,20 qui sont creusées dans la surface latérale cylindrique 2 et qui débouchent dans la surface d'extrémité conique 3, dans les intervalles situés entre la première plaquette de coupe 4 et les deux autres plaquettes de coupe 5 et 6. Ces rainures longitudinales 17 à 20 servent au dégagement des poussières de perçage.

Les figures 4 à 6, sur lesquelles les éléments correspondants sont désignés par les mêmes repères, montrent une variante de cette tête de foret à trois plaquettes de coupe 4,5,6. La première plaquette de coupe 4 est ici encore disposée diamétralement. Par contre, les deux autres plaquettes de coupe 5 et 6, situées de part et d'autre de la première plaquette 4, ne sont plus orientées parallèlement à la première plaquette 4, mais sont disposées dans des rainures respectives 8 et 9 ménagées suivant des directions B,C parallèles entre elles mais formant un angle aigu A par rapport à la direction diamétrale D de la première plaquette 4. L'angle d'inclinaison A peut avoir une valeur maximale de l'ordre de 20°.

Comme précédemment, les trois plaquettes de coupe 4,5,6 s'inscrivent ici dans un même cercle 12, et elles définissent au total six arêtes de coupe 10,11,13,14,15,16, ainsi que six points de guidage concentriques.

Contrairement à la première forme de réalisation, la tête de foret des figures 4 à 6 comporte seulement deux rainures longitudinales 21 et 22 pour le dégagement des poussières de perçage. Les deux rainures 21 et 22, diamétralement opposées, se situent dans les intervalles entre la première plaquette de coupe 4 et les deux autres plaquettes de coupe 5 et 6, aux endroits où ces plaquettes 4,5 et 6 sont les plus espacées.

Les têtes de foret, précédemment décrites, peuvent être notamment des têtes de forets de maçonnerie. Toutefois le domaine d'application de l'invention englobe tous les forets et outils de perçage analogues, à plaquettes de coupe rapportées.

## Revendications

1. Partie coupante d'un foret, comportant une tête de forme générale cylindrique, portant à son extrémité une première plaquette de coupe (4) centrale disposée et fixée suivant une direction diamétrale de ladite tête (1), et deux autres plaquettes de coupe (5,6) latérales, disposées et fixées de part et d'autre de la première plaquette (4), caractérisée en ce que les deux plaquettes de coupe latérales (5,6) ont leurs extrémités situées exactement sur le cercle (12) dans lequel s'inscrit la plaquette de coupe centrale (4), de manière à déterminer, à la phériphérie de la tête du foret, six points de guidage concentriques.

2. Partie coupante d'un foret selon la revendication 1, caractérisée en ce que la plaquette de coupe centrale (4) est placée, et fixée par brasage, dans une rainure diamétrale (7) creusée à l'extrémité (3) de la tête de foret (1), tandis que les deux plaquettes de coupe latérales (5,6) sont placées, et fixées par brasage, dans deux autres rainures respectives (8,9) creusées à l'extrémité (3) de la tête de foret (1) de part et d'autre de la rainure diamétrale (7).

3. Partie coupante d'un foret selon la revendication 1 ou 2, caractérisée en ce que les deux plaquettes de coupe latérales (5,6) sont orientées parallèlement à la plaquette de coupe centrale (4), et sont situées à égale distance (d) de celle-ci.

4. Partie coupante d'un foret selon la revendication 1 ou 2, caractérisée en ce que les deux plaquettes de coupe latérales (5,6) sont orientées suivant des directions (B,C) parallèles entre elles mais formant un angle aigu (A) par rapport à la direction diamétrale (D) de la plaquette de coupe centrale (4).

5. Partie coupante d'un foret selon la revendication 4, caractérisée en ce que l'angle d'inclinaison (A) des plaquettes de coupe latérales (5, 6), par rapport à la plaquette centrale (4), est inférieur ou égal à 20° environ.

6. Partie coupante d'un foret selon l'une quelconque des revendications 1 à 5, caractérisé en ce que les trois plaquettes de coupe (4,5,6) sont de forme générale pentagonale, les deux plaquettes latérales (5,6) étant de dimensions inférieures à celles de la plaquette centrale (4).

7. Partie coupante d'un foret selon l'une quelconque des revendications 1 à 6, caractérisée en ce que les deux plaquettes de coupe latérales (5,6) sont situées à la même hauteur que la plaquette de coupe centrale (4).

8. Partie coupante d'un foret selon l'une quelconque des revendications 1 à 6, caractérisée en ce que les deux plaquettes de coupe latérales (5,6) sont situées en avant ou en arrière de la plaquette de coupe centrale (4), les pointes des plaquettes latérales (5, 6), étant en particulier disposées "plus haut" que la plaquette centrale (4).

9. Partie coupante d'un foret selon l'une quelconque des revendications 1 à 8, caractérisée en ce que des rainures longitudinales, notamment au nombre de quatre rainures (17 à 20) ou de deux rainures (21,22), sont ménagées dans la tête de foret (1) et débouchent, à l'extrémité (3) de cette tête (1), dans les intervalles situés entre la plaquette de coupe centrale (4) et les deux plaquettes de coupe latérales (5,6).

## Patentansprüche

1. Schneidteil eines Bohrers, welches einen Kopf von im wesentlichen zylinderförmiger Form umfaßt, der an seinem Ende ein erstes zentrales Schneidplättchen (4), welches entlang einer diametral durch den Kopf (1) weisenden Richtung angeordnet und befestigt ist, und zwei weitere, seitliche Schneidplättchen (5, 6), die beidseits des ersten Plättchens (4) angeordnet und befestigt sind, aufweist, dadurch gekennzeichnet, daß die Enden der beiden seitlichen Schneidplättchen (5, 6) genau auf dem Kreis (12), in welchen das zentrale Schneidplättchen (4) einbeschrieben ist, angeordnet sind, um am Umfang des Bohrkopfes sechs konzentrisch angeordnete Führungspunkte zu definieren.

2. Bohrerschneidteil nach Anspruch 1, dadurch gekennzeichnet, daß das zentrale Schneidplättchen (4) in einer diametralen, in dem Ende (3) des Bohrkopfes (1) ausgeformten Nut (7) angeordnet und durch Löten befestigt ist, während die beiden seitlichen Schneidplättchen (5, 6) in zwei weiteren, entsprechenden, in dem Ende (3) der Bohrkopfes (1) beidseits der diametralen Nut (7) ausgeformten Nuten (8, 9) angeordnet und durch Löten befestigt sind.

3. Bohrerschneidteil nach Anspruch 1 oder 2, dadurch gekennzeichnet, daß die beiden seitlichen Schneidplättchen (5, 6) parallel zu dem zentralen Schneidplättchen (4) ausgerichtet und von diesem um denselben Abstand (d) beabstandet sind.

4. Bohrerschneidteil nach Anspruch 1 oder 2, dadurch gekennzeichnet, daß die beiden seitlichen Schneidplättchen (5, 6) entlang zueinander paraller, aber mit der diametralen Richtung (D) des zentralen Schneidplättchens (4) einen spitzen Winkel (A) bildender Richtungen (B, C) ausgerichtet sind.

5. Bohrerschneidteil nach Anspruch 4, dadurch gekennzeichnet, daß der Neigungswinkel (A) der seitlichen Schneidplättchen (5, 6) bezüglich des zentralen Schneidplättchens (4) kleiner oder gleich ungefähr 20 ist.

6. Bohrerschneidteil nach einem der Ansprüche 1 bis 5, dadurch gekennzeichnet, daß die drei Schneidplättchen (4, 5, 6) eine im wesentlichen fünfeckige Form haben, wobei die beiden seitlichen Plättchen (5, 6) Dimensionen aufweisen, die kleiner als die des zentralen Plättchens (4) sind.

7. Bohrerschneidteil nach einem der Ansprüche 1 bis 6, dadurch gekennzeichnet, daß die beiden seitlichen Schneidplättchen (5, 6) auf gleicher Höhe wie das zentrale Schneidplättchen (4) angeordnet sind.

8. Bohrerschneidteil nach einem der Ansprüche 1 bis 6, dadurch gekennzeichnet, daß die beiden seitlichen Schneidplättchen (5, 6) vor oder hinter dem zentralen Schneidplättchen (4) angeordnet sind, wobei insbesondere die Spitzen der seitlichen Plättchen (5, 6) weiter oben als das zentrale Plättchen (4) angeordnet sind.

9. Bohrerschneidteil nach einem der Ansprüche 1 bis 8, gekennzeichnet durch Längsnuten, insbesondere vier Nuten (17 bis 20) oder zwei Nuten (21, 22) an der Zahl, die in dem Bohrkopf (1) ausgespart sind und die von dem Ende (3) dieses Kopfes (1) ausgehend, in den zwischen dem zentralen Schneidplättchen (4) und den beiden seitlichen Schneidplättchen (5, 6) befindlichen Zwischenräumen ausgeformt sind.

## Claims

1. Cutting part of a drill bit, having a head of cylindrical shape overall, carrying at its end a first central cutting tip (4) disposed and fixed in a diametral direction of the said head (1), and two other lateral cutting tips (5, 6) disposed and fixed on each side of the first tip (4), characterised in that the two lateral cutting tips (5, 6) have their ends situated exactly on the circle (12) containing the central cutting tip (4), so as to determine, at the periphery of the head of the drill bit, six concentric guide points.

2. Cutting part of a drill bit according to Claim 1, characterised in that the central cutting tip (4) is placed, and fixed by brazing, in a diametral groove (7) formed at the end (3) of the drill bit head (1), whilst the two lateral tips (5, 6) are placed, and fixed by brazing, in two other respective grooves (8, 9) formed at the end (3) of the drill bit head (1) on each side of the diametral groove (7).

3. Cutting part of a drill bit according to Claim 1 or 2, characterised in that the two lateral cutting tips (5, 6) are oriented parallel to the central cutting tip (4), and are situated at equal distances (d) from it.

4. Cutting part of a drill bit according to Claim 1 or 2, characterised in that the two lateral cutting tips (5, 6) are oriented in directions (B, C) parallel to each other but forming an acute angle (A) with respect to the diametral direction (D) of the central cutting tip (4).

5. Cutting part of a drill bit according to Claim 4, characterised in that the angle of inclination (A) of the lateral cutting tips (5, 6), with respect to the central tip (4), is less than or equal to approximately 20°.

6. Cutting part of a drill bit according to any one of Claims 1 to 5, characterised in that the three cutting tips (4, 5, 6) are of pentagonal shape overall, the two lateral tips (5, 6) being of dimensions less than those of the central tip (4).

7. Cutting part of a drill bit according to any one of Claims 1 to 6, characterised in that the two lateral tips (5, 6) are situated at the same height as the central cutting tip (4).

8. Cutting part of a drill bit according to any one of Claims 1 to 6, characterised in that the two lateral cutting tips (5, 6) are situated in front of or behind the central cutting tip (4), the points of the lateral tips (5, 6) being in particular disposed "higher" than the central tip (4).

9. Cutting part of a drill bit according to any one of Claims 1 to 8, characterised in that the longitudinal grooves, notably numbering four grooves (17 to 20) or two grooves (21, 22), are formed in the drill bit head (1) and open out, at the end (3) of this head (1), in the gaps situated between the central cutting tip (4) and the two lateral cutting tips (5, 6).
